# EUROPEAN PATENT APPLICATION

(11) **EP 2 595 269 A1**
(43) Date of publication of application: **22.05.2013**
(21) Application number: 11189362.4
(22) Date of filing: 16.11.2011
(51) Int. Cl.: H02J 7/00

(54) **Method and system for determining a charge rate for a rechargeable battery**

(71) Applicant: Research In Motion Limited, Waterloo, ON N2L 3W8 (CA)
(72) Inventor: Sutarwala, Taha Shabbir Husain, Waterloo, Ontario N2L 3W8 (CA); Rich, David Gerard, Waterloo, Ontario N2L 1W4 (CA)
(74) Representative: Moore, Barry

(57) **Abstract**

A system and method for determining a charge rate for a battery and a method for charging the battery. The system having a memory component for storing user attributes relating to use patterns based on time of day; and a processor for determining the charge rate in accordance with the user attributes. The method for determining the charge rate consist of receiving indication that the battery is to be charged; and determining the charge rate based on user attributes relating to use patterns based on time of day. The method for charging the battery further includes charging the charge rate to the battery.

## Description

### FIELD

The present disclosure relates generally to batteries. More particularly, the present disclosure relates to a method and system for determining a charge rate for a battery and method for charging a rechargeable battery.

### BACKGROUND

Many portable electronic devices are currently being powered by rechargeable batteries. The speed at which the battery charges and discharges may affect its long term usability and effectiveness. In typical operation, the batteries are recharged when desired by the user. Most often, this occurs when the charge level of the battery is almost depleted. Rechargeable batteries tend to hold a decreasing charge level or charge capacity as the age of the battery increases. By charging the rechargeable battery at a quick charge rate, the maximum charge level of the battery also decreases thereby reducing the life cycle of the battery.

### BRIEF DESCRIPTION OF THE DRAWINGS

Embodiments of the present disclosure will now be described, by way of example only, with reference to the attached Figures.
Figure 1 illustrates a portable electronic device;
Figure 2 illustrates internal components of a portable electronic device;
Figure 3 is a graph showing cycle performance at various charge/discharge rates;
Figure 4 is a flow chart of the method for charging a battery; and
Figure 5 is a flow chart illustrating a method of determining a charge profile.

### DETAILED DESCRIPTION

Generally, the present disclosure provides a system and method for determining the charging rate of a rechargeable battery and a method for charging the battery. Although the charging method and system are described in terms of a portable electronic device, the same charging method may be used equally effectively on other battery operated or powered electronic devices where specific user habits, including a pattern of use or an ability to determine the time of day, are appreciable. Other battery powered electronic devices, for example a notebook computer, camera or portable DVD player, may be powered by rechargeable batteries and may benefit from the system and methods described below. In some cases, some electronic devices may include power sources that include rechargeable batteries operating in cooperation with other power storage elements, such as non-rechargeable batteries.

In a first aspect, the present disclosure provides a system for determining a charge rate of a battery, the system having a memory component for storing user attributes relating to use patterns based on time of day; and a processor for determining the charge rate in accordance with the user attributes.

In a further aspect, there is provided a method for determining the charge rate comprising receiving an indication that the battery is to be charged; and determining the charge rate based on user attributes relating to use patterns based on time of day.

In yet a further aspect there is provided a method for charging a battery comprising receiving an indication that the battery is to be charged; determining the charge rate based on user attributes relating to use patterns based on time of day and charging the charge rate to charge the battery.

Other aspects and features of the present disclosure will become apparent to those ordinarily skilled in the art upon review of the following description of specific embodiments in conjunction with the accompanying figures.

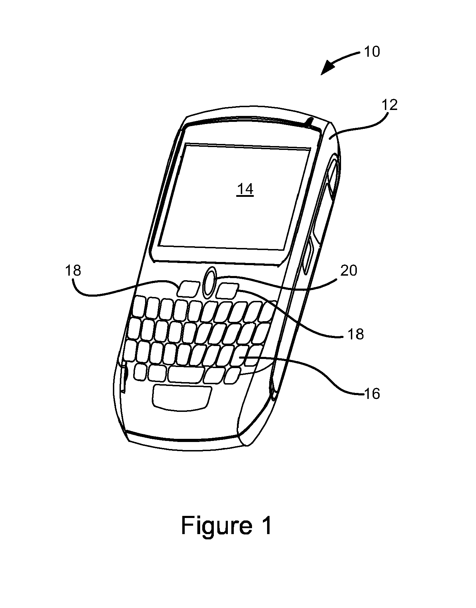

Figure 1 illustrates a perspective view of a portable electronic device 10. The portable electronic device 10, such as a mobile communication device, has a body 12, which includes a display screen 14, a keyboard/keypad 16, a set of buttons 18 and a trackball 20. It will be understood that the trackball 20 may also be a joystick, scroll wheel, roller wheel, touchpad or the like, or another button. The portable electronic device 10 includes other parts, which are not shown or described. The device may be sized to be held or carried in a human hand such that the device may be seen as a handheld device.

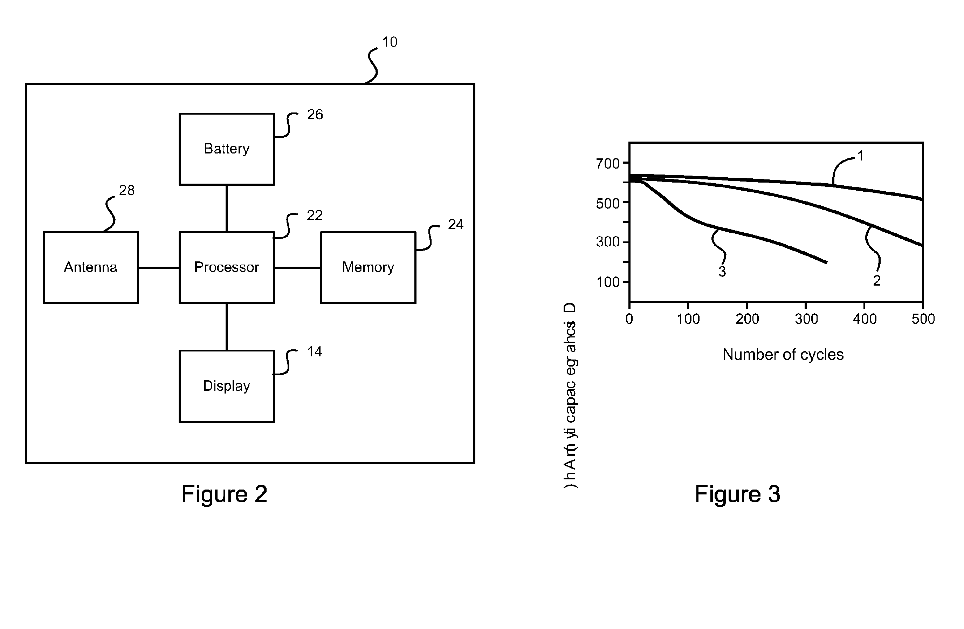

The portable electronic device 10, similar to other electronic devices, contains internal components such as shown in Figure 2. The system for determining a charging rate for a battery (also referred to as a charging system) interacts with the display 14 and includes a processor 22, and a memory component 24 and, optionally, an antenna 28. The system determines a charge rate for a rechargeable battery 26. The charge rate is used to describe the average charging rate over a charging cycle. The term "charge rate" may vary between drawing a maximum current available to charge the battery or may simply draw a trickle or small charge, which may enable the battery to stay at a current charge level.

In some embodiments, the charging system may also include the display. The display 14 may be operatively connected to the processor 22 through, for example, a printed circuit board or internal cabling. The processor may be further connected to the memory component 24, which may include both volatile and non-volatile memory. The processor 22 may be a separate processor for the charging system or may be the processor of the portable electronic device and may have the capability to determine or calculate the time (including calculating elapsed time between events or retrieving time of day by reference to an internal clock), or the portable electronic device 10 may have the capability to retrieve the time of day through the antenna 28, which may be connected to a wireless network. The battery charge level may be displayed graphically to the user on the display 14, or the user may access the battery charge level through an application executing on the mobile communication device. The portable electronic device 10 may be powered by a power source such as the rechargeable battery 26, which may be a Lithium Ion, Lithium Polymer, Silver-Zinc, Nickel Cadmium, or Nickel Metal Hydride battery, or a hybrid battery or fuel cell.

Figure 3 illustrates one graphic example of the cycle performance and discharge rates of a lithium ion battery. The information in the graph is based upon generalized data that may be discoverable by research, is intended for explanatory purposes and is not intended to represent any particular make or model of lithium ion battery. As seen from Figure 3, the number of cycles (each cycle being a charge and a discharge of a battery) decreases rapidly if the charge rate is increased. A similar decrease of the discharge capacity also can be noted at each cycle. Considering a base charge rate 1, when the charge rate is double 2 the base rate, the discharge capacity after 500 cycles is about half of the discharge capacity of the base rate, and if the actual charge rate is triple 3 the base rate 1, the battery may not even last 500 cycles. As shown in the graph, a base charge rate 1 may charge a battery at a rate of 1C, where C is a normalized parameter equal to the constant rate to fully discharge a fully charged battery in one hour. As can be seen from Figure 3, a rate of 2C is potentially damaging to the battery and a rate of 1C is usually a typical maximum base rate. These rates may depend on the cell chemistry and architecture of the battery. If the rate of charge can be controlled, a user may be able to improve the life cycle of a battery while still being able to obtain the requisite power levels when needed.

Charging the battery at a slower charge rate may be preferred in order to extend the number of cycles of the battery and reduce the degradation of the discharge capacity. At some points during a day, a user may need to have a quick charge rate in order to have the requisite power to perform certain applications on the portable electronic device. For example, if the user tends to use the portable electronic device most frequently from 2 to 5 pm, the user will likely want to have the device charge quickly if there is a need for charging just prior to this time. At other times, when the user is not using the portable electronic device, a slower charge rate can be used to charge the battery. For example, if the user rarely uses the electronic device between 1 to 5 am, a slower charge rate may be used, as there are several hours available in which to complete the charging. These user attributes relating to use patterns of the portable electronic device may be determined through monitoring the use of the portable electronic device or may be known by the user or programmed by the user. By allowing for a varied charging rate, and to allow at least some of the charge cycles to be at a slower charge rate, in other words a lower milliamp (mA) charge rate, the life cycle of the battery may be increased or improved. As stated above, these rates may depend on the cell chemistry and architecture and that charging at a rate that is too low or too slow for the cell chemistry and architecture should be avoided.

The selected charge rate may also vary on the time when certain tasks or applications are more frequently used. For example, the use of the device as a telephone, downloading or uploading data or online gaming tends to take greater battery power than typing emails. It may be preferred that during the time of the day the applications that require greater power are used, seen as a higher use period, the battery is charged at a higher charge rate. During the time that low power consuming applications are being executed, seen as a lower use period, a lower charge rate may be used in order to extend the life cycle of the battery. In a particular case, the default charge rate may be a low rate in order initially to preserve the life cycle of the battery.

In one case, the battery (that is, the power source for the portable electronic device 10) may include or operate in cooperation with a fuel cell. The fuel cell's cycle life is dependent on how quickly the fuel cell is brought up to operating power. For instance, at low temperatures, the ambient temperature around the fuel cell or the fuel cell may need to be brought to an acceptable operating temperature before the fuel cell is able to deliver efficiently. If the fuel cell is repeatedly brought to the acceptable temperature too quickly, the useful life of the fuel cell may be compromised. Also, the fuel cell cycle life may be reduced if the fuel cell is repeatedly cycled on and off. By modulating the output power, the fuel cell can be operated as a steady state. Typically, the energy efficiency of most fuel cells is improved when operated at less than maximum power whereby the fuel cell cycle life may be reduced when run continuously at high power outputs. In another case, the cycle life of a hybrid battery can benefit according to the system and methods presented herein, if the fuel cell system is capable of delivering a damaging charge current.

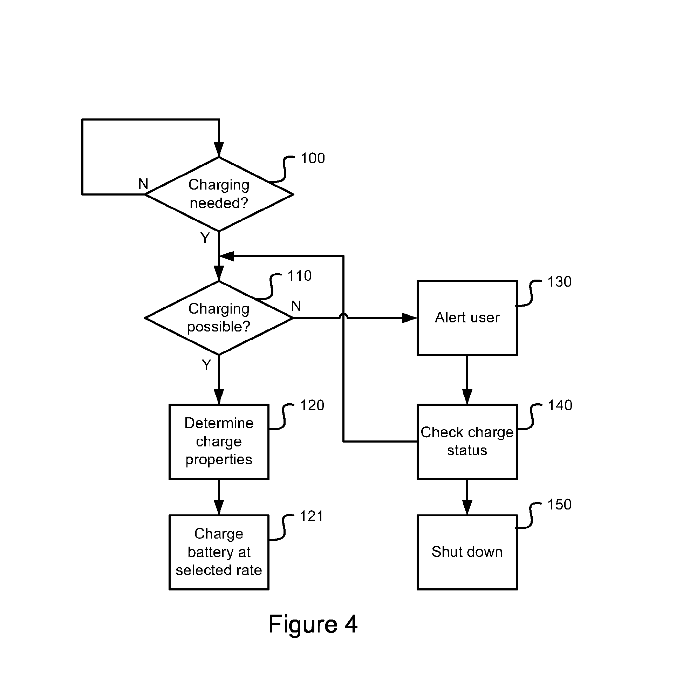

In one embodiment, the charge rate for charging the battery is determined by retrieving user attributes, such as battery use patterns, and the time of day. Figure 4 shows a method for charging a battery. The charging system has a processor 22 which is operatively configured to check the battery 26 charge level, be it at selected intervals, for example, every millisecond, every second, etc, or a continuous monitoring, to determine if charging is needed 100. If charging is currently not needed, for example, the battery is already fully charged or the charge level is above a particular level, the charging system will continue to monitor 100 the battery charge level.

Once the battery charge level of the electronic device is determined to be below a particular threshold, for example, any charge level under a selected value, the charging system receives an indication that the battery is to be charged and determines if charging is possible 110. The indication that the battery is to be charged may be signaled by the processor 22 of the charging system or the processor of the portable electronic device if the charging system has a separate processor. The indication may further include a visual or audible alarm to the user, indicating that the charge level of the portable electronic device has fallen below the selected value. The indication may also be shown on a display of the portable electronic device.

In the case of a fuel cell system being used as the power source for the device, the particular threshold could be set by the minimum time the fuel cell should be on so as not to cycle on and off too frequently. This particular threshold may be stored in the memory 24 and retrieved and compared by the processor 22 to the current sensed battery charge level. If the processor 22 is continuously monitoring the battery charge level, the comparison of the charge level and particular threshold may be executed continuously. In an alternative, the comparison may be completed at selected time intervals. If the electronic device is plugged into an external power source such as a wall socket or other electronic outlet, the charging system will be able to charge the battery 26. The processor 22 will then need to determine the charging properties 120 to determine the charge rate, as further detailed below, and then the battery is charged 121 at the determined charge rate. The charging system and method may also be started by the user either launching an application or by the user connecting the mobile communication device 10 to an external power source. Once connected the processor 22 may determine the charge properties 120 as detailed below.

If the charging system is not connected to an external power source and does not currently contain the ability to charge, the processor will alert 130 the user to the low charge level in the battery 26. The alert may be a visual message on the display 14, an audible alarm or another cue that the user would understand to mean that the charge level has fallen below the threshold. Once the user has been alerted 130, the charging system may increase the interval in which the processor 22 checks 140 the charge level of the battery, or if continuously checking, it will continue to check 140 the battery charge level.

If the user does not respond to the alerts regarding the battery charge level, the mobile communication device will eventually shut down 150 once the battery charge level has decreased below the required level to power the portable electronic device.

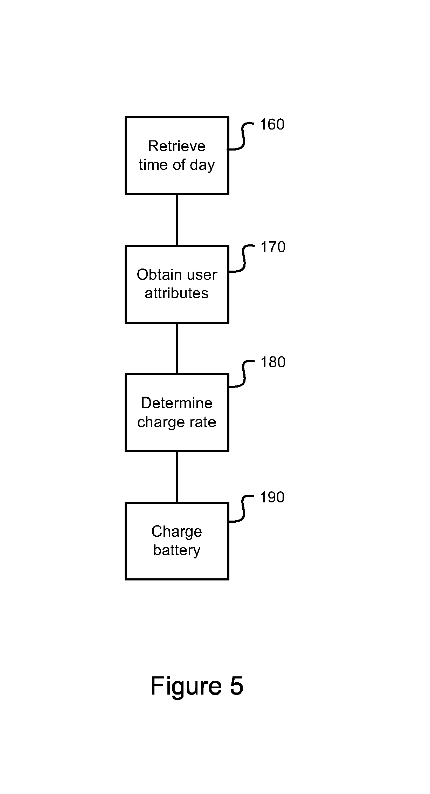

Figure 5 illustrates the method involved in determining the charging properties 120. First, the time of day is retrieved 160. The time of day may be calculated by the processor 22, using methods that can be programmed prior to being delivered to the user, or may be retrieved through the wireless network connection via the antenna 28 in the case of a network connected portable electronic device.

Next the charging system obtains user attributes 170. In general, user attributes include any use pattern relating to battery use during a day. The patterns may be directly related to battery use, or may be related to use of the various functions of the portable electronic device, which in turn relate to battery use. The patterns may affect or reflect battery use, and may include but are not limited to: patterns of high power demands, patterns of low power demands, patterns of software application execution, patterns of communication functionality usage, and so on. The patterns are typically observable over time, and may be monitored with respect to time of day, portable electronic device location (e.g., as determined by global positioning system) or change in location over time, and may be referred to as attributes relating to use patterns based on time of day. In an illustrative example, a user's frequent use of cellular telephone functionality between 8:00 and 8:30 a.m. may be noted, and consequently the higher power demands attendant to such usage may be observed as correlated to a particular time of day. In another illustrative example, rapid or prolonged change in location may indicate traveling, which experience may show may be an indicator of low power demand. User attributes may be obtained by observation-e.g., the device observing during what time periods power consumption tends to be low or high-or by direct input from a user-e.g., a user stores information that power usage is expected to be low between midnight and 6:00 a.m. The user attributes may be previously set and stored in the memory component 24, inputted or modified by a user, determined by the charging system by reviewing use patterns, or by a combination of the above. The user may be able to input key times of the day when the use of the device will be important. The data may be entered through an application or input device and these attributes may be stored in the memory component 24 and retrieved by the processor 22. As already indicated, these user attributes may also be determined based on monitoring user patterns over time. For example, if heavy device use is observed frequently between the hours of 8 am and 11 am, the user attribute will include that this time period is a heavy use period. If minimal use is observed after 11 pm until 8 am, the user attributes will include this period as a low use period. In another case, the user attributes may be a combination of the above. The user patterns may be monitored and determined by usage patterns and state of charge (SOC), with lower SOC given a preference to charge quickly. The usage patterns may be updated through the use of user input or charging system determination. If the user knows the usage patterns will change for a specific reason in the next week, for example, travel, vacation or large work project, the user may modify the patterns determined by the charging system to update user attributes. Obtaining the user attributes generally refers to taking the user attributes in any format from memory 24 so that the user attributes can be evaluated, processed or otherwise used by processor 22.

Once the user attributes have been retrieved 170 from the memory component, the charge rate is determined 180. The charge rate is set, adjusted or otherwise determined in accordance with (that is, as a function of) the user attributes, which in turn are a function of use patterns based on time of day. The charge rate is set, adjusted or otherwise determined by the processor 22. With the charging properties of the time of day and user attributes, the approximate battery power consumption of the portable electronic device may be predicted. If the time of day and user attributes point to a situation where high use period of the portable electronic device is predicted by the charging system, the battery charge level is required to be increased rapidly. The charge rate will be set to be a higher charge rate to charge 190 the battery 26 quickly and may be set at a maximum charge rate. The higher charge rate will increase the speed at which the battery fully charges, allowing the user to have the requisite battery charge level during a high use time of day. If the user attributes and time of day point to a low use period, a slower charge rate will be selected to charge 190 the battery. The battery is then charged at the determined charge rate. The determined charge rate for a fuel cell system may not charge the fuel cell in a traditional sense, but may either bring the fuel cell to an acceptable operating temperature at either a quick or slower rate, or may monitor and control the cycle rate of the fuel cell to reduce or lower the frequency at which the fuel cell is cycled on and off.

The charging rate may vary depending on the above characteristics. The charging rate may also vary on the current charge level of the battery. For example, if the user attributes and time of day indicated that it is a high use period when the portable electronic device is provided with external power, but the battery charge level is currently at, for example 95%, the charging system may select a slower charge rate as the charge level indicates the battery is almost at full charge. The charge level may be determined by the system through the processor reviewing and determining the current charge level of the battery.

In one embodiment, the higher charge rate may be a charge rate at the maximum current rate provided by the external power source and accepted by the battery. The slower charge rate may vary depending on the time allocated in the low use period. The slower charging rate may be determined by the length of time available for charging before the mobile communication device returns to a high use period and the current charge level of the batter. The system may modify the slower charge rate accordingly. For example, if the user attributes show that the current low use period is for 8 hours, the slower charge rate may be set to be just enough that the battery reaches full charge at the end of the low use period. If, for example, the low use period within the current time of day, is only for 4 hours, the slower charge rate may be set at a higher current to ensure the battery is fully charged prior to the end of the low use period.

The charging system and methods described herein may have a potential benefit of increasing the life cycle of the battery by charging at a slower charge rate for at least some of the charging cycles. This slower charge rate is intended to improve the cycle life of the battery as charging at a slower charge rate has been shown to extend the cycle life of the battery, while still allowing the battery to be fully charged within the period of low use.

The charging system and methods may have a further benefit in that, as not all of the charging cycles are forced to charge at a lower rate, a user in a high use period can still benefit from a higher charging rate, which is intended to provide enough charge for the battery to operate the desired functions and applications during the high use period.

The charging system and methods is intended to be beneficial for both a rechargeable battery, which may benefit from increased life cycle by charging at a slower charge rate during some charge cycles, and a fuel cell, which may benefit from being brought to an acceptable temperature at a slower rate.

In another alternative, the charge rate can be a determination based on the combination of the user attributes obtained, the time of day and a review of a user's calendar appointments if the portable electronic device includes a calendar application. For example, if a user attaches the portable electronic device to an external power source wherein the user attributes and time of day indicate a slower charge rate would be appropriate, the system may access and review the calendar application for any upcoming appointments prior to calculating a charge rate. If the calendar has an appointment scheduled at a time of normal low use, the system may select to charge at the faster charge rate and not the rate otherwise determined. Similarly, if the user attributes and time of day would typically indicate a high use period, but there are no meetings or appointments scheduled in the calendar, the system may select a slower charge rate than may otherwise have been determined.

In another alternative, the charging system may determine a charge rate through the time of day and user attributes in combination with the current location of the portable electronic device.

In the preceding description, for purposes of explanation, numerous details are set forth in order to provide a thorough understanding of the embodiments; however the specific details are not necessarily required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A system for determining a charge rate for recharging a rechargeable battery comprising:
a memory component for storing user attributes relating to use patterns based on time of day; and
a processor for determining the charge rate in accordance with the user attributes.

2. The system of claim 1 further comprising an antenna configured to retrieve the time of day through a wireless network.

3. The system of claim 1 or 2 wherein the user attributes are at least one of:
determined by monitoring user activity;
entered manually by a user.

4. A method for determining a charge rate for recharging a rechargeable battery comprising:
receiving indication that the battery is to be charged; and
determining the charge rate based on user attributes, relating to one of use patterns or a function of use patterns, based on time of day.

5. The method of claim 4 further comprising before determining the charge rate, retrieving user attributes from a memory component.

6. The method of claim 4 or 5 wherein user attributes are determined by at last one of monitoring user activity or are determined from user input.

7. The method of any one of claims 4 to 6 wherein calculating the charge rate comprises:
retrieving time of day;
obtaining use patterns for the time of day; and
determining the charge rate based on time of day and use patterns for the time of day.

8. The method of claim 7 wherein if the use pattern is deemed a high use period, the charge rate is a maximum charge rate.

9. The method of claim 7 wherein if the use pattern is deemed a low use period, the charge rate is established by determining an amount of time of the low use period and determining a charge rate that will fully charge the battery in the amount of time of the low use period.

10. The method of any one of claims 4 to 9 further comprising:
determining a charge level of the battery before determining the charge rate.

11. The method of any one of claims 4 to 9 further comprising:
accessing a user calendar before calculating the charge rate.
